# EUROPÄISCHE PATENTSCHRIFT

(11) **EP 1 884 276 B1**
(45) Veröffentlichungstag und Bekanntmachung des Hinweises auf die Patenterteilung: **21.11.2012**
(21) Anmeldenummer: 07014552.9
(22) Anmeldetag: 25.07.2007
(51) Int. Cl.: B01D 46/24

(54) **Luftfiltersystem**
Air filter system
Système de filtration d'air

(30) Priorität: 04.08.2006 DE 102006036480
(43) Veröffentlichungstag der Anmeldung: 06.02.2008
(73) Patentinhaber: LTG Aktiengesellschaft, 70435 Stuttgart (DE)
(72) Erfinder: Bauer, Volker, Dr.-Ing., 71120 Grafenau (DE); Fichter, Rolf, Dipl.-Ing., 70736 Fellbach (DE); Widmann, Ralf, Dipl.-Ing., 70599 Stuttgart (DE)
(74) Vertreter: Gleiss & Grosse

(56) Entgegenhaltungen:
- EP-A- 0 459 307
- DE-A1- 10 245 733
- DE-A1- 19 958 801
- FR-A1- 2 309 267
- GB-A- 191 015 076
- US-A- 5 322 535

## Beschreibung

Die Erfindung betrifft ein Luftfiltersystem mit mindestens einem Trommelfilter, dessen Mantelfläche ein Filtermedium aufweist, und mit einer Absaugeinrichtung zum Reinigen der Innenseite der Mantelfläche, wobei eine Antriebseinrichtung mindestens ein Absaugelement für den Reinigungsvorgang sowohl kreisförmig entlang der Innenseite der Mantelfläche als auch axial in Richtung der Längsachse des Trommelfilters bewegt, wobei das Absaugelement an einem länglichen Element angeordnet ist, das sich entlang der Längsachse des Trommelfeldes erstreckt, und das längliche Element um seine Längsachse drehbar an einem Schlitten der Reinigungsvorrichtung gelagert ist.

Luftfiltersysteme der eingangs genannten Art sind bekannt. Sie dienen insbesondere in Industrieanlagen, beispielsweise in Textilindustrieanlagen, in denen beträchtliche Anteile an Schwebstoffen oder Staub anfallen, zum Ausfiltern von die Luft belastenden Stoffe. Die Luft passiert für den Reinigungsvorgang eine Stirnfläche mindestens eines Trommelfilters des Luftfiltersystems, um in das Trommelinnere zu gelangen. Von dort aus durchsetzt die Luft die Mantelfläche des Trommelfilters, die mit einem Filtermedium versehen ist. Auf diese Art und Weise bildet sich ein Filterkuchen auf der Innenseite der Mantelfläche, der saugend abgereinigt wird. Hierzu wird ein Absaugelement sowohl kreisförmig entlang der Innenseite der Mantelfläche als auch axial in Richtung der Längsachse des Trommelfilters bewegt, um den Filterkuchen abzusaugen. Derartige liegend angeordnete Trommelfilter werden häufig zu mehreren als Trommelfiltergruppe zusammengefasst, d.h., ein derartiges Mehrfach-Trommelfilter weist mehrere zum Beispiel matrixartig angeordnete Trommelfilter auf, wobei die Längsachsen der Trommelfilter parallel zueinander verlaufen. Für den erwähnten Reinigungsvorgang ist pro Trommelfilter ein Absaugelement vorgesehen, das mittels eines Horizontalschlittens im jeweiligen Trommelfilter hin- und herverfahren wird, wobei es gleichzeitig eine Kreisbewegung durchführt, um vorzugsweise auf einer schraubenlinienförmigen Bahn die Abreinigung vorzunehmen. Liegt ein Mehrfach-Trommelfilter vor, so ist dem Horizontalschlitten eine entsprechende Anzahl von Absaugelementen zugeordnet. Die Aufstellung des bekannten Luftfiltersystems erfordert eine relativ große Grundfläche, die für andere Zwecke nicht zur Verfügung steht und daher einen Kostenfaktor darstellt.

Aus der EP-A-0 459 307 ist ein Luftfiltersystem mit horizontal liegenden Trommelfiltern bekannt. In einer Gruppe zusammengefasste Absaugelemente werden mittels eines Horizontalschlittens innerhalb der Trommelfilter verlagert, um eine Reinigung durchzuführen.

Der Erfindung liegt daher die Aufgabe zugrunde, ein Luftfiltersystem der eingangs genannten Art zur Verfügung zu stellen, das platzsparend und preiswert ist.

Diese Aufgabe wird erfindungsgemäß dadurch gelöst, dass das Trommelfilter mit vertikal verlaufender Längsachse angeordnet ist, dass der Schlitten vertikal auf und nieder verfahrbar gelagert ist und dass für die Auf- und Niederbewegung mit sehr geringer Antriebsleistung ein über eine Umlenkung geführtes Gegengewicht zur teilweisen oder nahezu vollständigen Gewichtskompensation vorgesehen ist. Diese Anordnung hat den Vorteil, dass sich die vom Trommelfilter eingenommene Grundfläche relativ klein ist und auch nicht dadurch vergrößert wird, dass eine seitliche Zone zur Verfügung gestellt werden muss, um dort die Antriebseinrichtung für das Absaugelement zu installieren und um dort einen Bewegungsraum für die Hin- und Herbewegung der Antriebskonstruktion des Absaugelements zu schaffen, da diese Zone erfindungsgemäß oberhalb des Trommelfilters zur Verfügung steht und daher keine zusätzliche Grundfläche benötigt. Vielmehr wird die Grundfläche des Trommelfilters zweifach genutzt, in dem dort einerseits das Trommelfilter aufgestellt und andererseits oberhalb des Trommelfilters die erwähnte Zone gebildet wird. Oberhalb des Trommelfilters wird der bislang nicht genutzte Raum für den erfindungsgemäßen Zweck genutzt, wobei dies dadurch möglich wird, dass das Trommelfilter nicht mehr -wie im Stand der Technik- liegend, sondern stehend, also mit vertikaler Längsachse aufgestellt ist. Ferner ist vorgesehen, dass das Absaugelement an einem länglichen Element angeordnet ist, das sich entlang der Längsachse des Trommelfilters erstreckt. Dieses längliche Element dient dem mechanischen Halten des Absaugelements und bietet die Möglichkeit, entsprechend weit in das Innere des Trommelfilters axial hineinzufahren, um alle abzureinigenden Bereiche an der Innenseite der Mantelfläche des Trommelfilters zu erreichen. Das längliche Element ist um seine Längsachse drehbar an einem Schlitten der Reinigungsvorrichtung gelagert ist, wobei der Schlitten vertikal verfahrbar gelagert. Mittels der Drehung des länglichen Elements um seine Längsachse wird das Absaugelement auf einer Kreisbahn geführt. Eine Bewegung des Schlittens hat zur Folge, dass das Absaugelement axial innerhalb des Trommelfilters bewegt wird. Eine Drehung des länglichen Elements bewegt das Absaugelement entlang einer Kreisbahn im Innern des Trommelfilters. Die Anordnung kann nun derart getroffen sein, dass die beiden Bewegungen überlagert werden, wodurch sich eine schraubenlinienförmige Bewegung ergibt. Es ist alternativ auch möglich, dass die Drehbewegung von der Axialbewegung entkoppelt wird (insbesondere aufgrund von zwei Antrieben, von denen der eine die Vertikalbewegung und der andere die Drehbewegung realisiert) und auf diese Art und Weise die Absaugreinigung, also das Entfernen von jeweils zu erreichenden Bereichen des Filterkuchens auf der Innenseite der Mantelfläche des Trommelfilters vorzunehmen. Der Schlitten ist vertikal verfahrbar gelagert, sodass der Raum oberhalb des Trommelfilters genutzt wird.

Nach einer Weiterbildung der Erfindung ist vorgesehen, dass die Antriebseinrichtung für die Axialbewegung einen Spindelantrieb aufweist. Die Spindel dieses Spindelantriebs verläuft vertikal, um den Schlitten vertikal auf- und niederbewegen zu können. Ein mit Innengewinde versehenes Mitnahmeelement (Nuss) befindet sich auf der Gewindespindel des Spindelantriebs und führt durch Drehung der Spindel eine Vertikalbewegung durch, um auf diese Art und Weise den Schlitten mitzunehmen und entsprechend zu verfahren.

Nach einer Weiterbildung der Erfindung ist vorgesehen, dass der Spindelmotor des Spindelantriebs ortsfest angeordnet ist, d.h., er weist eine maschinengestellfeste Position auf, bewegt sich also nicht mit dem Schlitten oder anderen beweglichen Bauteilen des Luftfiltersystems mit.

Nach einer Weiterbildung der Erfindung ist vorgesehen, dass die Antriebseinrichtung für die Kreisbewegung einen Drehantrieb aufweist. Der Drehantrieb ist mit den vorzugsweise länglichen Elementen drehbar gekuppelt, sodass das sich am drehbaren Element befindliche, mindestens eine Absaugelement eine Rotationsbewegung ausführen kann. Der Drehantriebsmotor des Drehantriebs kann sich bevorzugt auf dem Schlitten befinden, bewegt sich also mit der Vertikalbewegung des Schlittens mit. Spindelmotor und Drehantriebsmotor sind vorzugsweise jeweils als Elektromotor ausgebildet. Alternativ ist es auch möglich, dass das Absaugelement feststehend installiert ist und sich das Trommelfilter bewegt (Dreh- sowie Vertikalbewegung). Es sind auch Mischformen denkbar, d.h., das Absaugelement macht die eine Bewegung (zum Beispiel die Vertikalbewegung) und das Trommelfilter die andere (zum Beispiel die Drehbewegung).

Nach einer bevorzugten Ausbildung ist vorgesehen, dass die Antriebseinrichtung als Kreuzspindelantriebseinrichtung ausgebildet ist. Auf der Kreuzspindel der Kreuzspindelantriebseinrichtung befindet sich ein Mitnahmeelement (Nuss), das durch Drehung der Kreuzspindel -ähnlich wie bei einer Gewindespindel- axial mitgenommen wird, wobei am Ende der Kreuzspindel jedoch eine Reversierbewegung erfolgt, und demzufolge bei gleicher Drehrichtung eine Hin- und Herbewegung vorliegt. Beim Gegenstand der Erfindung ist die Kreuzspindel selbstverständlich vertikal angeordnet, um ein Absaugelement im vertikal stehenden Trommelfilter auf- und niederbewegen zu können. Wird anstelle einer Kreuzspindel eine normale Gewindespindel verwendet, so ist eine Drehrichtungsumkehr für einen Reversierbetrieb erforderlich.

Vorzugsweise ist eine Anströmung von zu filternder Luft in die untere Stirnfläche des Trommelfilters vorgesehen. Die Luft wird demzufolge von unten in das Trommelfilter axial eingebracht und durchsetzt radial die Mantelfläche des Trommelfilters, um die Belastungspartikel auf der Innenseite der Mantelfläche des Trommelfilters abzuscheiden. Von da aus kann die gereinigte Luft axial und/oder radial abgeführt werden.

Insbesondere kann vorgesehen sein, dass das längliche Element nicht nur dem mechanischen Halten des Absaugelements dient, sondern als Hohlkörper ausgebildet ist und demzufolge eine Absaugleitung bilden kann. Die Absaugleitung ist an eine Vakuumquelle oder dergleichen angeschlossen. Ferner steht das Absaugelement mit der Absaugleitung, also dem länglichen Element, in Verbindung, sodass die abzusaugenden Filterkuchenbereiche über das Absaugelement, das längliche Element und gegebenenfalls einen Absaugkanal oder dergleichen mittels der Vakuumquelle abgesaugt werden.

Das Absaugelement ist bevorzugt als Absaugdüse ausgebildet, wodurch ein besonders guter Reinigungseffekt erzielt wird.

Insbesondere ist vorgesehen, dass das Luftfiltersystem mehrere Trommelfilter als vertikale Trommelfiltergruppe aufweist, denen jeweils mindestens ein Absaugelement zugeordnet ist. Alle Trommelfilter sind demzufolge mit vertikaler Längsachse vorzugsweise als Reihe oder als Matrix angeordnet und bilden die erwähnte Trommelfiltergruppe. Jedem Trommelfilter der Trommelfiltergruppe ist ein eigenes Absaugelement zugeordnet, das entlang der jeweiligen Trommelfilterachsen bewegbar ist, und demzufolge eine Vertikalbewegung durchführt und auch entlang einer Kreisbahn geführt werden kann, um den gesamten Umfang der Innenseite der ein Filtermedium aufweisenden Mantelfläche des jeweiligen Trommelfilters zu erreichen.

Ferner ist vorzugsweise vorgesehen, dass den Absaugelementen eine gemeinsame Antriebseinrichtung zugeordnet ist, d.h., mit einer einzigen Antriebseinrichtung können alle Absaugelemente gleichzeitig bewegt werden.

Die Erfindung betrifft ferner ein Verfahren zum Reinigen von Luft mittels eines Luftfiltersystems mit mindestens einem Trommelfilter, dessen Mantelfläche ein Filtermedium aufweist, und mit einer Absaugeinrichtung zum Reinigen der Innenseite der Mantelfläche, wobei eine Antriebseinrichtung mindestens ein Absaugelement für den Reinigungsvorgang sowohl kreisförmig entlang der Innenseite der Mantelfläche als auch axial in Richtung der Längsachse des Trommelfilters entlang der Innenseite bewegt, und wobei das Trommelfilter mit vertikal verlaufender Längsachse aufgestellt wird. Die Reinigungsbewegung um sich entlang der Längsachse des Trommelfilters zu bewegen erfolgt demzufolge vertikal, da auch das Trommelfilter mit vertikal verlaufender Längsachse aufgestellt ist. Demzufolge ist ein für die Reinigung erforderlicher Freiraum, der vorstehend auch Zone genannt wurde, oberhalb des Trommelfilters gegeben, sodass keine zusätzliche kostbare Grundfläche zur Verfügung gestellt werden muss. Vielmehr erfolgt eine Doppelnutzung der Grundfläche, indem dort das Trommelfilter durch die Vertikalposition raumsparend aufgestellt wird und über dem Trommelfilter, ohne das weitere Grundfläche benötigt wird, die Abreinigungs-Baugruppen angeordnet werden und sich auch in dieser Zone bewegen können, um den Filterkuchen abzureinigen.

Die Zeichnungen veranschaulichen die Erfindung anhand eines Ausführungsbeispiels und zwar zeigt:
- Figur 1: eine perspektivische Ansicht eines Luftfiltersystems,
- Figur 2: eine Seitenansicht des Luftfiltersystems,
- Figur 3: eine 90° gegenüber der Figur 2 gedrehte Seitenansicht des Luftfiltersystems und
- Figur 4: eine Draufsicht auf das Luftfiltersystem.

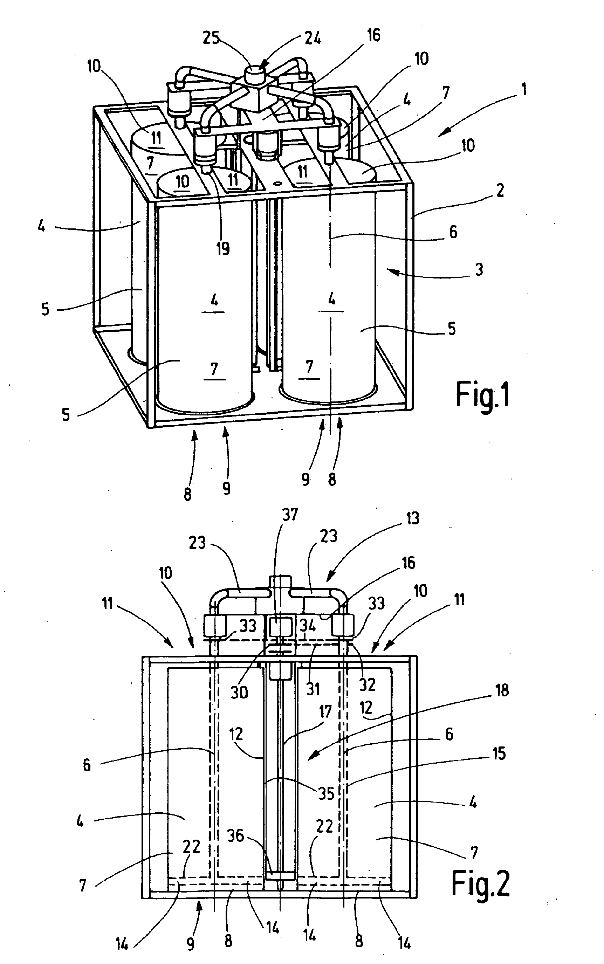

Die Figuren 1 bis 4 zeigen ein Luftfiltersystem 1, das ein Maschinengestell 2 aufweist. Das Maschinengestell 2 ist rahmenartig ausgebildet und weist eine quaderförmige Grundstruktur auf. Innerhalb des Maschinengestells 2 ist eine Trommelfiltergruppe 3 angeordnet, die im vorliegenden Ausführungsbeispiele vier Trommelfilter 4 umfasst. Jedes Trommelfilter 4 weist eine Mantelfläche 5 auf, die konzentrisch zur mittigliegenden Längsachse 6 jedes Trommelfilters 4 verläuft. Die Trommelfilter 4 sind jeweils mit vertikal verlaufender Längsachse 6 angeordnet, d.h., sie sind stehend installiert und werden in dieser Position vom Maschinengestell 2 erhalten. Die Mantelflächen 5 der Trommelfilter 4 sind jeweils von einem Filtermedium 7 gebildet. Die untere Stirnfläche 8 jedes Trommelfilters 4 ist offen ausgebildet, sodass hierdurch eine Luftanströmöffnung 9 für zu reinigende Luft geschaffen ist. Die obere Stirnfläche 10 jedes Trommelfilters 4 ist jeweils mit einem luftundurchlässigen Deckel 11 versehen.

Mittels nicht dargestellter Luftförder- und Führungsmittel wird Luft eines Raumes oder Abluft einer Maschine, beispielsweise einer Textilmaschine, in die Anströmöffnungen 9 eingeleitet. Die Luft tritt aus den Mantelflächen 5 der Trommelfilter 4 radial wieder aus, wobei sich auf den Innenseiten 12 der als Filtermedium 7 ausgebildeten Mantelflächen 5 ausgefilterte Artikel, Schwebstoffe und so weiter als Filterkuchen abscheiden.

Um die Filterkuchen von den Innenseiten 12 der Trommelfilter 4 durch Absaugung abzureinigen, ist eine Absaugeinrichtung 13 vorgesehen. Diese weist für jedes Trommelfilter 4 mindestens ein Absaugelement 14 (Figur 2) auf, wobei in der Figur 2 beispielhaft zwei Absaugelemente 14 pro Trommelfilter 4 vorgesehen sind, die einander diametral zur Längsachse 6 gegenüberliegen und mit der Längsachse 6 einen rechten Winkel einschließen. Demzufolge verlaufen die rohrförmigen Absaugelemente 14 radial und liegen an der jeweiligen Innenseite 12 des jeweiligen Trommelfilters 4 an. Die Absaugelemente 14 sind kommunizierend mit dem jeweiligen länglichen Element 15 verbunden, das rohrförmig ausgebildet ist und koaxial zur jeweiligen Längsachse 6 verläuft. Die Länge jedes länglichen Elements 15 ist derart gewählt, dass in der aus der Figur 2 hervorgehenden Stellung des Luftfiltersystems 1 der untere innere Randbereich des Trommelfilters 4 von den Absaugelementen 14 erreicht werden kann. Die länglichen Elemente 15 sind drehbar an einem Schlitten 16 gelagert, wobei ein einziger Schlitten 16 alle vier länglichen Elemente 15 drehbar um die jeweilige Längsachse 6 hält.

Im Maschinengestell 2 ist zentral eine Kreuzspindel 17 einer Kreuzspindelantriebseinrichtung 18 drehbar gelagert, wobei die Kreuzspindel 17 vertikal verlaufend und axial fest angeordnet ist.

Gemäß Figur 2 wird der Schlitten 16 mittels einer Führung 35 vertikal verfahrbar gelagert, wobei ferner die länglichen Elemente 15 Öffnungen 19 in zwei oberen Querstreben 20 des Maschinengestells 2 drehbar und verschieblich durchgreifen. Die Führung 35 verläuft parallel zur Kreuzspindel 17, wobei der bewegbare Teil der Führung 35 an seinen unteren Ende eine Spindelmutter 36 (Nuss) aufweist, die mit der Kreuzspindel kämmt.

Die kommunizierend mit den als Absaugdüsen 22 ausgebildeten Absaugelementen 14 verbundenen länglichen Elemente 15 sind oberhalb des Schlittens 16 an sternförmig zusammenlaufende Absaugrohre 23 angeschlossen, die zu einem Sammler 24 führen, dessen Absaugstutzen 25 an eine nicht dargestellte Luftfördereinrichtung angeschlossen ist.

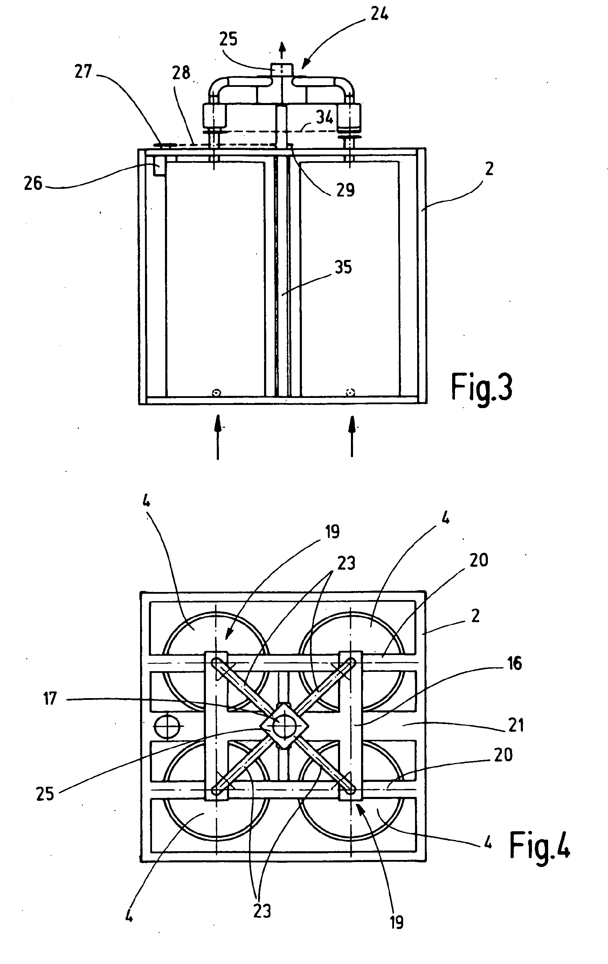

Ein Kreuzspindelantriebsmotor 26 ist maschinengestellfest angeordnet und als Elektromotor ausgeführt. Er treibt über eine Riemenscheibe 27 und einen Riemen 28 eine Riemenscheibe 29 an, die drehfest mit der Kreuzspindel 17 verbunden ist (Figur 3). Hierdurch ist die Kreuzspindel 17 in Drehung versetzbar. Mittels eines Drehantriebsmotors 37, der sich am Schlitten 16 befindet, ist eine weitere Riemenscheibe 30 (Figur 2) drehbar, welche über einen Riemen 31 mit einer Riemenscheibe 32 gekuppelt ist, die sich drehfest an einem der länglichen Elemente 15 befindet. Alle länglichen Elemente 15 weisen jeweils Riemenscheiben 33 (Figur 2) auf, die von einem gemeinsamen Riemen 34 umschlungen werden.

Es ergibt sich folgende Funktion: Wird der Kreuzspindelantriebsmotor 26 eingeschaltet, so wird dadurch die Kreuzspindel 17 in Drehung versetzt. Die Spindelmutter 36 kämmt mit der Kreuzspindel 17, sodass hierdurch der Schlitten 16 auf- und niederfährt. Dies erfolgt in vertikaler Richtung. Der gleichzeitig in Betrieb befindliche Drehantriebmotor 37 treibt über die Riemen 31 und 34 alle länglichen Elemente 15 drehend an, die jeweils um die vertikalen Längsachsen 6 gedreht werden, sodass die Absaugdüsen 22 sich kreisförmig entlang der Innenseiten 12 der Trommelfilter 4 bewegen. Überlagert zu diesen Drehbewegungen ist die axiale Auf- und Niederbewegung des Schlittens, sodass die Absaugdüsen 22 die Innenseiten 12 der Trommelfilter 4 entlang von schraubenlinienförmigen Wegen absaugen und auf diese Art und Weise von in sich dort bildenden Filterkuchen befreien können.

Aus den Figuren 1 bis 4 deutlich ersichtlich, dass sich die Absaugeinrichtung zusammen mit den zugehörigen Bauteilen, die der Abreinigung der Mantelflächen 5 der Trommelfilter 4 dienen, oberhalb der Trommelfilter 4 befinden. Insbesondere dann, wenn die Absaugdüsen 22 ganz nach oben gefahren sind, ist der Schlitten 16 hoch nach oben gefahren, was jedoch keinen zusätzlichen Grundflächenbedarf für das Luftfiltersystem 1 erfordert. Hieraus wird deutlich, dass aufgrund des oberhalb der Trommelfilter 4 liegenden Bewegungsfreiraumes der Reinigungseinrichtung das erfindungsgemäße Luftfiltersystem 1 nur einen sehr geringen Grundflächenbedarf hat. Das liegt daran, dass die Trommelfilter 4 mit vertikal verlaufenden Längsachsen 6 aufgestellt sind.

Nachstehen wird nochmals konkret auf die Erfindung eingegangen, wobei zum beschriebenen Ausführungsbeispiel auch Alternativen genant werden. Das erfindungemäße Luftfiltersystem weist vorzugsweise ein vertikal angeordnetes Trommelfilter oder eine Trommelfiltergruppe mit mindestens zwei Trommelfiltern auf, die vertikal angeordnet sind. Die Durchströmung der zur reinigenden Luft erfolgt bei jedem Trommelfilter 4 von innen nach außen, wobei die Anströmung von unten erfolgt und die Abströmung nach oben und/oder seitlich durchgeführt wird. Die Trommelfilter 4 werden innen kontinuierlich oder intermittierend abgereinigt. Die Abreinigung kann kontinuierlich, zeitgesteuert und/oder druckgesteuert erfolgen. Die Abreinigung wird mittels Unterdruck mit sogenannten Absaugeinheiten oder Absaugelementen, insbesondere Absaugdüsen, durchgeführt, wobei mindestens eine Absaugeinheit pro Trommelfilter 4 vorgesehen ist. Die Abreinigung erfolgt innerhalb jedes Trommelfilters 4 partiell. Insbesondere ist vorgesehen, dass die Abreinigung durch Überlagerung zweier Bewegungen erfolgt, nämlich einer Rotationsbewegung und einer vertikalen transaxialen Bewegung. Die Bewegungen können getrennt voneinander betrachtet und angetrieben werden. Bei der vertikalen, transaxialen Bewegung nach oben und unten wird vorzugsweise der gesamte Absaugstrang bewegt. Die vertikale Bewegung erfolgt bevorzugt über einen Spindelantrieb, der sich selbst nicht mitbewegt. Der Spindelantrieb kann bevorzugt elektrisch oder pneumatisch erfolgen. Er kann vorzugsweise direkt oder über einen Riemen durchgeführt werden. Der Rotationsantrieb ist bevorzugt auf den vertikal bewegten Absaugestrang angeordnet. Der Rotationsantrieb erfolgt über einen elektrischen Motor, insbesondere Getriebemotor. Beim Rotationsantrieb kann vorgesehen sein, dass jedes Trommelfilter 4 separat über Riemen angetrieben wird. Die Kraftübertragung mittels Riemen erfolgt bevorzugt ohne zusätzliche Kupplung oder Spannelemente. Insbesondere kann vorgesehen sein, dass mittels eines über eine Umlenkung geführten Gegengewichts das Gewicht der Absaugeinheit zumindest teilweise oder nahezu vollständig kompensiert wird, sodass die Antriebsleistung für die Auf- und Niederbewegung sehr gering ist. Bei der Kreuzspindelantriebseinrichtung kann vorgesehen sein, dass nur ein Antriebsmotor vorhanden ist, der sowohl die Vertikalbewegung als auch die Drehbewegung bewirkt.

Vorstehend wurde auf Riemenantriebe eingegangen. Anstelle der Riemenantriebe können auch Kettenantriebe verwendet werden.

## Patentansprüche

1. Luftfiltersystem mit mindestens einem Trommelfilter (4), dessen Mantelfläche (5) ein Filtermedium (7) aufweist, und mit einer Absaugeinrichtung (13) zum Reinigen der Innenseite der Mantelfläche (5), wobei eine Antriebseinrichtung mindestens ein Absaugelement (14) für den Reinigungsvorgang sowohl kreisförmig entlang der Innenseite der Mantelfläche (5) als auch axial in Richtung der Längsachse des Trommelfilters (4) bewegt, wobei das Absaugelement (14) an einem länglichen Element (15) angeordnet ist, das sich entlang der Längsachse (6) des Trommelfilters (4) erstreckt, und das längliche Element (15) um seine Längsachse (6) drehbar an einem Schlitten (16) der Reinigungsvorrichtung gelagert ist, **dadurch gekennzeichnet, dass** das Trommelfilter (4) mit vertikal verlaufender Längsachse (6) angeordnet ist, dass der Schlitten (16) vertikal auf und nieder verfahrbar gelagert ist und dass für die Auf- und Niederbewegung mit sehr geringer Antriebsleistung ein über eine Umlenkung geführtes Gegengewicht zur teilweisen oder nahezu vollständigen Gewichtskompensation vorgesehen ist.

2. Luftfiltersystem nach Anspruch 1, **dadurch gekennzeichnet, dass** die Antriebseinrichtung für die Axialbewegung einen Spindelantrieb aufweist.

3. Luftfiltersystem nach Anspruch 2, **dadurch gekennzeichnet, dass** ein Spindelmotor, insbesondere Kreuzspindelantriebsmotor (26), des Spindelantriebs ortsfest angeordnet ist.

4. Luftfiltersystem nach einem der vorhergehenden Ansprüche, **dadurch gekennzeichnet, dass** die Antriebseinrichtung für die Kreisbewegung einen Drehantrieb aufweist.

5. Luftfiltersystem nach Anspruch 4, **dadurch gekennzeichnet, dass** ein Drehantriebsmotor des Drehantriebs auf dem Schlitten (16) angeordnet ist.

6. Luftfiltersystem nach einem der vorhergehenden Ansprüche, **dadurch gekennzeichnet, dass** die Antriebseinrichtung als Kreuzspindelantriebseinrichtung (18) ausgebildet ist.

7. Luftfiltersystem nach einem der vorhergehenden Ansprüche, **dadurch gekennzeichnet, dass** eine Anströmung von zu filternder Luft in die untere Stirnfläche (8) des Trommelfilters (4) erfolgt.

8. Luftfiltersystem nach einem der vorhergehenden Ansprüche, **dadurch gekennzeichnet, dass** das längliche Element (15) als Absaugleitung dient.

9. Luftfiltersystem nach einem der vorhergehenden Ansprüche, **dadurch gekennzeichnet, dass** das Absaugelement (14) als Absaugdüse (22) ausgebildet ist.

10. Luftfiltersystem nach einem der vorhergehenden Ansprüche, **dadurch gekennzeichnet, dass** mehrere Trommelfilter (4) als vertikale Trommelfiltergruppe (3) zusammengefasst sind, denen jeweils mindestens ein Absaugelement (14) zugeordnet ist.

11. Luftfiltersystem nach Anspruch 10, **dadurch gekennzeichnet, dass** den Absaugelementen (14) eine gemeinsame Antriebseinrichtung zugeordnet ist.

## Claims

1. An air filter system comprising at least one drum filter (4), the surface area (5) of this filter being provided with a filter medium (7), and a suction device (13) for cleaning the inside of the surface area (5), a driving device displacing at least one suction element (14) for the cleaning process in circular motions along the inside of the surface area (5) as well as axially in the direction of the longitudinal axis of the drum filter (4), the suction element (14) being disposed on an elongated element (15), which extends along the longitudinal axis (6) of the drum filter (4), and the elongated element (15) being mounted rotatably about its longitudinal axis (6) on a carriage (16) of a cleaning device, **characterized in that** the drum filter (4) is disposed with its longitudinal axis (6) extending vertically, that the carriage (16) is mounted such that it can be vertically displaced up and down, and that for the up and down movements with a very low driving power a counterweight guided by a deflection is provided for partial or almost complete weight compensation.

2. An air filter system according to claim 1, **characterized in that** the driving device comprises a spindle drive for axial displacement.

3. An air filter system according to claim 2, **characterized in that** a spindle motor, particularly a cross-arm spindle motor (26), of the spindle drive is disposed in a stationary manner.

4. An air filter system according to any one of the preceding claims, **characterized in that** the driving device comprises a rotary drive for the circular movements.

5. An air filter system according to claim 4, **characterized in that** a rotary driving motor of the rotary drive is disposed on the carriage (16).

6. An air filter system according to any one of the preceding claims, **characterized in that** the driving device is configured as a cross-arm spindle driving device (18).

7. An air filter system according to any one of the preceding claims, **characterized in that** air to be filtered flows into the lower face (8) of the drum filter (4).

8. An air filter system according to any one of the preceding claims, **characterized in that** the elongated element (15) serves as the suction duct.

9. An air filter system according to any one of the preceding claims, **characterized in that** the suction element (14) is configured as a suction nozzle (22).

10. An air filter system according to any one of the preceding claims, **characterized in that** a plurality of drum filters (4) are combined to form a vertical drum filter group (3), at least one suction element (14) being associated with each drum filter.

11. The air filter system according to claim 10, **characterized in that** the suction elements (14) are associated with a common driving device.

## Revendications

1. Système de filtration d'air comportant au moins un filtre à tambour (4), dont la nappe (5) présente un milieu filtrant (7), et comportant un dispositif d'aspiration (13) destiné au nettoyage de la face interne de la nappe (5), dans lequel, pour l'opération de nettoyage, un dispositif d'entraînement met au moins un élément d'aspiration (14) non seulement en mouvement circulaire le long de la face interne de la nappe (5), mais également en mouvement axial en direction de l'axe longitudinal du filtre à tambour (4), l'élément d'aspiration (14) étant disposé au niveau d'un élément oblong (15) qui s'étend le long de l'axe longitudinal (6) du filtre à tambour (4) et l'élément oblong (15) est logé pivotant autour de son axe longitudinal (6) au niveau d'un chariot (16) du dispositif de nettoyage, **caractérisé en ce que** le filtre à tambour (4) est disposé avec l'axe longitudinal (6) s'étendant verticalement, **en ce que** le chariot (16) est logé de manière à être mobile verticalement et **en ce que** pour le mouvement vertical avec puissance motrice très faible, un contrepoids guidé via une chicane est prévu en vue de la compensation de poids partielle ou quasi complète.

2. Système de filtration d'air selon la revendication 1, **caractérisé en ce que** le dispositif d'entraînement présente un entraînement à broche pour le mouvement axial.

3. Système de filtration d'air selon la revendication 2, **caractérisé en ce qu'**un moteur de broche, en particulier un moteur d'entraînement à broche en croix (26), de l'entraînement à broche est disposé fixe.

4. Système de filtration d'air selon l'une quelconque des revendications précédentes, **caractérisé en ce que** le dispositif d'entraînement présente un entraînement en rotation pour le mouvement circulaire.

5. Système de filtration d'air selon la revendication 4, **caractérisé en ce qu'**un moteur d'entraînement en rotation de l'entraînement en rotation est disposé sur le chariot (16).

6. Système de filtration d'air selon l'une quelconque des revendications précédentes, **caractérisé en ce que** le dispositif d'entraînement est conçu sous forme de dispositif d'entraînement à broche en croix (18).

7. Système de filtration d'air selon l'une quelconque des revendications précédentes, **caractérisé en ce que** de l'air à filtrer afflue sur la face terminale inférieure (8) du filtre à tambour (4).

8. Système de filtration d'air selon l'une quelconque des revendications précédentes, **caractérisé en ce que** l'élément oblong (15) serve de conduit d'aspiration.

9. Système de filtration d'air selon l'une quelconque des revendications précédentes, **caractérisé en ce que** l'élément d'aspiration (14) est conçu sous forme de buse d'aspiration (22).

10. Système de filtration d'air selon l'une quelconque des revendications précédentes, **caractérisé en ce que** plusieurs filtres à tambour (4) sont réunis sous forme de groupe vertical de filtres à tambour (3), auxquels est respectivement associé au moins un élément d'aspiration (14).

11. Système de filtration d'air selon la revendication 10, **caractérisé en ce qu'**un dispositif d'entraînement commun est associé aux éléments d'aspiration (14).
